# EUROPEAN PATENT APPLICATION

(11) **EP 4 579 864 A1**
(43) Date of publication of application: **02.07.2025**
(21) Application number: 23857258.0
(22) Date of filing: 15.08.2023
(51) Int. Cl.: H01M 10/0587, H01M 4/133, H01M 4/134, H01M 4/36, H01M 4/38, H01M 10/052, H01M 10/0566, H01M 50/414, H01M 50/434, H01M 50/443, H01M 50/446, H01M 50/451, H01M 50/46, H01M 50/463

(54) **NONAQUEOUS ELECTROLYTE SECONDARY BATTERY**

(30) Priority: 24.08.2022 JP 2022133102
(71) Applicant: Panasonic Energy Co., Ltd., Osaka 570-8511 (JP)
(72) Inventor: KITAYAMA, Godai, Kadoma-shi, Osaka 571-0057 (JP); KASAMATSU, Shinji, Kadoma-shi, Osaka 571-0057 (JP)
(74) Representative: Novagraaf International SA
(86) International application number: PCT/JP2023/029513
(87) International publication number: WO 2024/043145

(57) **Abstract**

This nonaqueous electrolyte secondary battery is characterized by comprising an electrode body (14) which is obtained by winding a positive electrode (11) and a negative electrode (12) with a pair of separators (13) being interposed therebetween, and is also characterized in that: the negative electrode (12) has a non-facing part (12a) that does not face the positive electrode (11) with the pair of separators (13) being interposed therebetween; the non-facing part (12a) is wound with 1.5 turns or more from the inner end of the electrode body (14) in the winding direction; at least one of the pair of separators (13) comprises a base material layer and a functional layer that is formed on the base material layer; the functional layer comprises a heat-resistant layer that contains inorganic particles, and resin particles that are dispersed in the heat-resistant layer and have an average particle diameter that is larger than the thickness of the heat-resistant layer; the resin particles form projected parts that protrude from the surface of the heat-resistant layer; and the functional layer of at least one of the pair of separators (13) faces the positive electrode (11).

## Description

### TECHNICAL FIELD

The present disclosure relates to a non-aqueous electrolyte secondary battery.

### BACKGROUND

In recent years, as a secondary battery having a high output and a high energy density, a non-aqueous electrolyte secondary battery including an electrode assembly in which a positive electrode and a negative electrode are arranged to face each other with a separator interposed therebetween has been widely used.

For example, Patent Literature 1 discloses a non-aqueous electrolyte secondary battery including an electrode assembly in which a separator is interposed between a negative electrode and a positive electrode and these electrodes are wound, in which the negative electrode has a non-facing portion that does not face the positive electrode on an inner peripheral side of the electrode assembly, and the non-facing portion has at least two turns on the inner peripheral side of the electrode assembly.

### CITATION LIST

### PATENT LITERATURE

Patent Literature 1: JP 2013-137946 A

### SUMMARY

Incidentally, in a non-aqueous electrolyte secondary battery including a winding-type electrode assembly, when the electrode assembly expands with a charge-discharge cycle, stress is locally applied to a center of the electrode assembly, and an electrode plate constituting the electrode assembly may be deformed (buckled). Such electrode plate deformation may be suppressed by disposing the non-facing portion on an inner end side in a winding direction of the winding-type electrode assembly.

However, since a non-aqueous electrolyte is easily held in a narrow space between the non-facing portion of the negative electrode on the inner end side in the winding direction of the electrode assembly and the separator, when the battery is charged and discharged, the non-aqueous electrolyte on the non-facing portion is decomposed, and there is a problem that initial charge-discharge efficiency of the battery is lowered.

Therefore, an object of the present disclosure is to provide a non-aqueous electrolyte secondary battery capable of suppressing electrode plate deformation associated with a charge/discharge cycle and suppressing a decrease in initial charge-discharge efficiency.

A non-aqueous electrolyte secondary battery according to the present disclosure includes: an electrode assembly formed by winding a positive electrode and a negative electrode with a pair of separators interposed therebetween; and a non-aqueous electrolyte, in which the negative electrode has a non-facing portion that does not face the positive electrode with the pair of separators interposed therebetween, and the non-facing portion is wound greater than or equal to 1.5 turns from an inner end in a winding direction of the electrode assembly, at least one of the pair of separators has a base material layer and a functional layer formed on the base material layer, the functional layer includes a heat resistant layer containing inorganic particles and resin particles dispersed in the heat resistant layer and having an average particle diameter larger than a thickness of the heat resistant layer, the resin particles form a projection projecting from a surface of the heat resistant layer, and the functional layer of at least one of the pair of separators faces the positive electrode.

According to the present disclosure, it is possible to provide a non-aqueous electrolyte secondary battery capable of suppressing electrode plate deformation associated with a charge/discharge cycle and suppressing a decrease in initial charge-discharge efficiency.

### BRIEF DESCRIPTION OF DRAWINGS

FIG. 1 is a schematic sectional view of a non-aqueous electrolyte secondary battery as an example of an embodiment.
FIG. 2 is a schematic sectional view of an electrode assembly as viewed from a winding axis direction.
FIG. 3 is a schematic sectional view showing an example of a separator.
FIG. 4 is a view showing a state of a positive electrode, a negative electrode, and the separator when an inner end side of the electrode assembly in a winding direction is developed.
FIG. 5 is a view showing a state of the positive electrode, the negative electrode, and the separator when an inner end side of a conventional electrode assembly in the winding direction is developed.
FIG. 6 is a view for describing a method for evaluating electrode plate deformation.

### DESCRIPTION OF EMBODIMENTS

Hereinafter, an example of an embodiment of a non-aqueous electrolyte secondary battery according to the present disclosure will be described in detail.

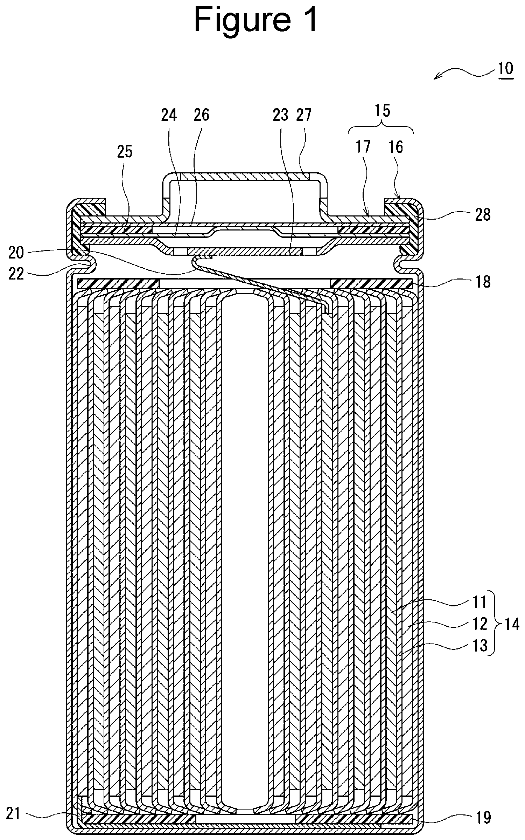

FIG. 1 is a schematic sectional view of a non-aqueous electrolyte secondary battery as an example of an embodiment. A non-aqueous electrolyte secondary battery 10 shown in FIG. 1 includes a winding-type electrode assembly 14 formed by winding a positive electrode 11 and a negative electrode 12 with a pair of separators 13 interposed therebetween, a non-aqueous electrolyte, insulating plates 18 and 19 respectively arranged above and below the electrode assembly 14, and a battery case 15. The battery case 15 includes an outer casing 16 that houses the electrode assembly 14, a non-aqueous electrolyte, and the like, and a sealing assembly 17 that closes an opening of the outer casing 16. The battery case 15 is not limited to a cylindrical or rectangular metal case, and may be, for example, a resin case (so-called laminate type) formed by laminating a resin sheet.

The non-aqueous electrolyte includes, for example, a non-aqueous solvent and electrolyte salt dissolved in the non-aqueous solvent. As the non-aqueous solvent, for example, esters, ethers, nitriles, amides, and mixed solvents of two or more thereof are used. The non-aqueous solvent may contain a halogen-substituted product in which at least a part of hydrogen in a solvent described above is substituted with a halogen atom such as fluorine. As the electrolyte salt, for example, a lithium salt such as LiPF₆ is used.

The outer casing 16 is, for example, a bottomed cylindrical metal container. A gasket 28 is provided between the outer casing 16 and the sealing assembly 17, to ensure sealability of an inside of the battery. The outer casing 16 has, for example, a projecting portion 22 having a part of a side surface projecting inward and supporting the sealing assembly 17. The projecting portion 22 is preferably formed in an annular shape in a circumferential direction of the outer casing 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between peripheral edges of the lower vent member 24 and the upper vent member 26. When an internal pressure of the non-aqueous electrolyte secondary battery 10 increases due to heat generated by an internal short circuit or the like, for example, the lower vent member 24 deforms to push the upper vent member 26 up toward the cap 27 and breaks, and thus a current pathway between the lower vent member 24 and the upper vent member 26 is cut off. When the internal pressure further increases, the upper vent member 26 breaks, and gas is discharged from an opening of the cap 27.

In the non-aqueous electrolyte secondary battery 10 shown in FIG. 1, a positive electrode lead 20 attached to the positive electrode 11 extends to the sealing assembly 17 side through a through-hole of the insulating plate 18, and a negative electrode lead 21 attached to the negative electrode 12 extends to the bottom side of the outer casing 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to an inner surface of the bottom of the outer casing 16 by welding or the like, and the outer casing 16 serves as a negative electrode terminal.

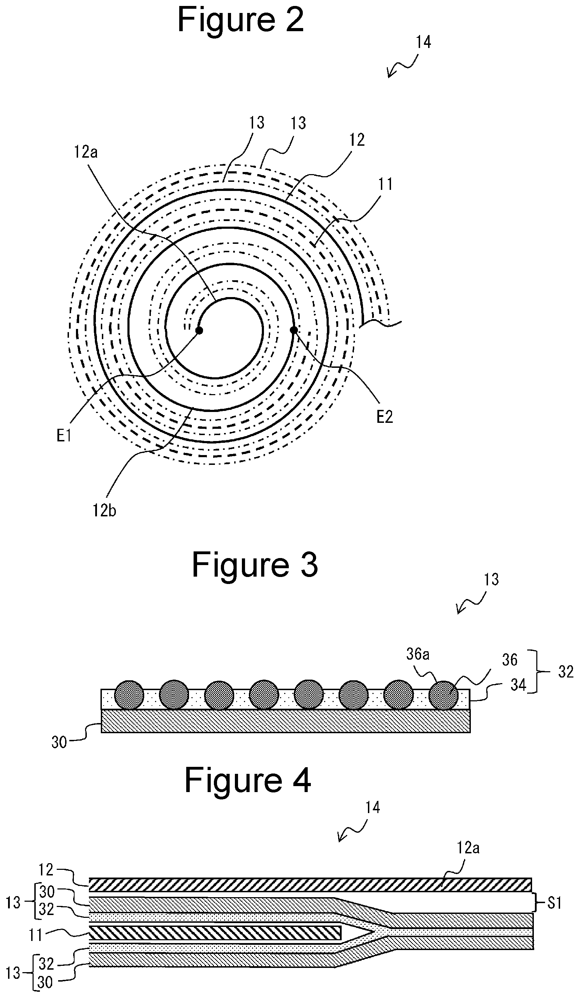

FIG. 2 is a schematic sectional view of the electrode assembly as viewed from a winding axis direction. In FIG. 2, in order to make an arrangement relationship easy to understand, the negative electrode 12 is indicated by a solid line, the positive electrode 11 is indicated by a broken line, and the separator 13 is indicated by a one-dot chain line. Further, in FIG. 2, a gap between the positive electrode 11, the negative electrode 12, and the separator 13 is exaggerated. The electrode assembly 14 is formed by winding the positive electrode 11 and the negative electrode 12 with the pair of separators 13 interposed therebetween. Specifically, the belt-shaped positive electrode 11, the belt-shaped negative electrode 12, and the pair of belt-shaped separators 13 are laminated in an order of one separator 13, the positive electrode 11, the other separator 13, and the negative electrode 12, and then this laminate is spirally wound to produce the electrode assembly 14. In the electrode assembly 14, a longitudinal direction of each electrode is a winding direction, and a width direction of each electrode is a winding axis direction.

As shown in FIG. 2, only the negative electrode 12 of the positive electrode 11 and the negative electrode 12 is disposed at a winding-start end of the electrode assembly 14. Specifically, the negative electrode 12 has a non-facing portion 12a that does not face the positive electrode 11 with the pair of separators 13 interposed therebetween, and the non-facing portion 12a is wound 1.5 turns from an inner end in the winding direction (point E1 in FIG. 2) that is the winding-start end of the electrode assembly 14. That is, the non-facing portion 12a is a portion from the point E1 shown in FIG. 2 to a point E2 in the winding direction. Further, the negative electrode 12 has a facing portion 12b that is wound following the non-facing portion 12a and faces the positive electrode 11 with the pair of separators 13 interposed therebetween. Note that in FIG. 2, a gap is provided between the pair of separators 13 adjacent to the non-facing portion 12a of the negative electrode 12 in order to clarify a configuration of the pair of separators 13, however, in practice, the pair of separators 13 are bonded to each other at this position. A state of the pair of separators 13 at the non-facing portion 12a of the negative electrode 12 will be described later.

The non-facing portion 12a is wound greater than or equal to 1.5 turns from the inner end in the winding direction of the electrode assembly 14, and is preferably wound by 1.5 turns to 3 turns from the inner end in the winding direction of the electrode assembly 14. Then, the non-facing portion 12a wound greater than or equal to 1.5 turns from the inner end in the winding direction of the electrode assembly 14 relieves stress locally applied to a center of the electrode assembly 14 along with charging and discharging of the battery, so that deformation (buckling) of an electrode plate can be suppressed.

Hereinafter, the positive electrode 11, the negative electrode 12, and the separator 13 constituting the electrode assembly 14 will be described.

### [Positive Electrode]

The positive electrode 11 includes a positive electrode current collector and a positive electrode mixture layer formed on a surface of the positive electrode current collector. The positive electrode mixture layer is preferably formed on both surfaces of the positive electrode current collector. As the positive electrode current collector, a foil of a metal such as aluminum which is stable in a potential range of the positive electrode 11, a film having such a metal disposed on a surface layer, or the like can be used. The positive electrode mixture layer contains, for example, a positive electrode active material, a binder, a conductive agent, and the like. The positive electrode 11 can be produced, for example, by applying a positive electrode mixture slurry containing the positive electrode active material, the binder, the conductive agent, and the like onto the positive electrode current collector, drying a coating film, and then rolling the coating film to form the positive electrode mixture layer on both surfaces of the positive electrode current collector.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LixCo_{y}M_{1-y}O_{z}, LiₓNi_{1-yMy}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly or in combination of two or more kinds thereof. The positive electrode active material preferably contains a lithium nickel composite oxide such as LiₓNiO₂, LiₓCo_{y}Ni_{1-y}O₂, or LiₓNi₁₋yM_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3) from the viewpoint of achieving high capacity of the non-aqueous electrolyte secondary battery. Inorganic particles such as tungsten oxide, aluminum oxide, and a lanthanoid containing compound may be fixed to a particle surface of the lithium transition metal oxide.

Examples of the conductive agent contained in the positive electrode mixture layer include carbon materials such as carbon black (CB), acetylene black (AB), Ketjen black, carbon nanotube (CNT), graphene, and graphite. These may be used singly or in combination of two or more kinds thereof.

Examples of the binder contained in the positive electrode mixture layer include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

### [Negative Electrode]

The negative electrode 12 includes a negative electrode current collector and a negative electrode mixture layer formed on a surface of the negative electrode current collector. The negative electrode mixture layer is preferably formed on both surfaces of the negative electrode current collector. As the negative electrode current collector, a foil of a metal such as copper or a copper alloy which is stable in a potential range of the negative electrode, a film having such a metal disposed on a surface layer, or the like can be used. The negative electrode mixture layer contains, for example, a negative electrode active material, a binder, and the like. Examples of the binder include those similar to those for the positive electrode 11. The negative electrode 12 can be produced, for example, by applying a negative electrode mixture slurry containing a negative electrode active material, the binder, and the like onto the negative electrode current collector, drying a coating film, and then rolling the coating film to form the negative electrode mixture layer on both surfaces of the negative electrode current collector.

The negative electrode active material contained in the negative electrode mixture layer is not particularly limited, for example, as long as it can reversibly store and release lithium ions, and examples thereof include a carbon material and a Si-based material

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material includes, for example, a lithium ion conducting phase and Si particles dispersed in the lithium ion conducting phase. The lithium ion conducting phase includes, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which beryllium, magnesium, calcium, strontium, barium, and radium belong from the viewpoint of high lithium ion conductivity and the like. Among them, the silicate phase is preferably a silicate phase containing lithium (hereinafter, may be referred to as a lithium silicate phase) from the viewpoint of high lithium ion conductivity and the like.

The lithium silicate phase is represented by, for example, a formula: Li_{2z}SiO_{2+z} (0 < z < 2). From the viewpoints of stability, ease of production, lithium ion conductivity, and the like, z preferably satisfies a relationship of 0 < z < 1, and more preferably z = 1/2.

The Si-based material in which the Si particles are dispersed in the silicon oxide phase is represented by, for example, a general formula SiOₓ (a range of 0 < x < 2 is preferable, and a range of 0.5 ≤ x ≤ 1.6 is more preferable). The Si-based material in which the Si particles are dispersed in the carbon phase is represented by, for example, a general formula SiₓC_{y} (ranges of 0 < x ≤ 1 and 0 < y ≤ 1 are preferable).

A conductive layer coated with conductive carbon may be formed on a surface of the Si-based material. The conductive layer can be formed by, for example, a CVD method using acetylene, methane, or the like, a method in which coal pitch, petroleum pitch, a phenol resin, or the like is mixed with a silicon-based active material and subjected to heat treatment, or the like. As a heat treatment apparatus that performs heat treatment, for example, a hot air furnace, a hot press, a lamp, a sheath heater, a ceramic heater, a rotary kiln, or the like can be used. In addition, the conductive layer may be formed by fixing a conductive filler such as carbon black to a particle surface of the Si-based material using the binder.

In addition to the carbon material and the Si-based material, examples of the negative electrode active material that can reversibly store and release lithium ions include Sn, an alloy containing Sn, a Sn-based material such as tin oxide, and a Ti-based material such as lithium titanate.

### [Separator]

FIG. 3 is a schematic sectional view showing an example of the separator. As shown in FIG. 3, the separator 13 has a base material 30 and a functional layer 32 formed on the base material 30. The functional layer 32 may be provided on one surface of the base material 30 or may be provided on both surfaces of the base material 30. Here, at least one of the pair of separators 13 used in the electrode assembly 14 described above is a separator having the base material 30 and the functional layer 32 formed on the base material 30 as shown in FIG. 3. Note that, the other of the pair of separators 13 may be, for example, made of only the base material 30.

The base material 30 is, for example, a porous sheet having ion permeability and insulating properties, and specific examples thereof include a microporous thin film, a woven fabric, and a nonwoven fabric. The material of the base material 30 is not particularly limited, and examples thereof include polyolefins such as polyethylene, polypropylene, a copolymer of polyethylene and an α-olefin, acrylic resins, polystyrene, polyester, cellulose, polyimide, polyphenylene sulfide, polyether ether ketone, and a fluororesin.

The functional layer 32 includes a heat resistant layer 34 containing inorganic particles, and resin particles 36 dispersed in the heat resistant layer 34 and having an average particle diameter (D50) larger than a thickness of the heat resistant layer 34. The resin particles 36 having the average particle diameter (D50) larger than the thickness of the heat resistant layer 34 form projections 36a projecting from a surface of the heat resistant layer 34.

Examples of the inorganic particles contained in the heat resistant layer 34 include metal oxide particles, metal nitride particles, metal fluoride particles, and metal carbide particles.

Examples of the metal oxide particles include aluminum oxide, titanium oxide, magnesium oxide, zirconium oxide, nickel oxide, silicon oxide, and manganese oxide. Examples of the metal nitride particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide.

The inorganic particles may be porous aluminosilicates such as zeolite (M_{2/n}O·Al₂0₃·xSiO₂·yH₂O, M is a metal element, n is a valence of M, x ≥ 2, and y ≥ 0), layered silicates such as talc (Mg₃Si₄O₁₀(OH)₂), minerals such as barium titanate (BaTiO₃) and strontium titanate (SrTiO₃), and the like. Note that these may be used singly or in combination of two or more kinds thereof.

The average particle diameter (D50) of the inorganic particles is preferably, for example, in a range of 0.1 µm to 1.0 µm. In the present specification, D50 means a particle size at which a cumulative frequency in a volume-based particle size distribution is 50% from a smallest particle size, and is also called a median diameter. The particle size distribution of the inorganic particles can be measured using a laser diffraction type particle size distribution measuring apparatus (for example, MT3000II manufactured by MicrotracBEL Corp.) using water as a dispersion medium.

The content of the inorganic particles contained in the heat resistant layer 34 is, for example, preferably in a range of 15 mass% to 85 mass%, and more preferably in a range of 30 mass% to 60 mass% based on the total mass of the heat resistant layer 34.

The thickness of the heat resistant layer 34 is preferably smaller than the thickness of the base material 30, and is, for example, 0.5 µm to 5 µm.

The heat resistant layer 34 preferably further contains the binder. The binder has a function of bonding the inorganic particles to each other and the inorganic particles to the base material 30. Examples of the binder include fluorine-based resins such as polyvinylidene fluoride (PVDF) and polytetrafluoroethylene (PTFE), polyimide-based resins, acrylic resins, polyolefin-based resins, styrene-butadiene rubber (SBR), nitrile-butadiene rubber (NBR), carboxymethyl cellulose (CMC) or a salt thereof, and polyvinyl alcohol (PVA). These may be used singly or in combination of two or more kinds thereof. The content of the binder contained in the heat resistant layer 34 is preferably 0.5 to 10 mass%, and more preferably 1 to 5 mass% based on the total mass of the heat resistant layer 34.

The resin particles 36 dispersed in the heat resistant layer 34 are required to have the average particle diameter (D50) larger than the thickness of the heat resistant layer 34. The average particle diameter (D50) of the resin particles 36 depends on the thickness of the heat resistant layer 34, but is preferably, for example, in a range of 2 µm to 10 µm.

The content of the resin particles 36 dispersed in the heat resistant layer 34 is, for example, preferably in a range of 1 mass% to 15 mass%, and more preferably in a range of 3 mass% to 7 mass% based on the total mass of the heat resistant layer 34 from the viewpoint of securing good adhesiveness of the separator 13.

The number of projections 36a formed by the resin particles 36 is, for example, preferably 10 to 35, and more preferably 15 to 30 in a range of 100 µm×100 µm when a surface of the functional layer 32 is viewed in a plan view from the viewpoint of securing good adhesiveness of the separator 13.

As the resin particles 36, for example, a known polymer that can be used as the binder can be used. Examples of a monomer unit constituting the resin particle 36 (polymer) include an aromatic vinyl monomer unit, a (meth)acrylic acid ester monomer unit, and a fluorine-containing monomer unit. Note that in the present disclosure, "(meth)acryl" means acryl and/or methacryl. Note that the phrase that the resin particles 36 (polymer) "contain a monomer unit" means that a repeating unit derived from a monomer is contained in a polymer obtained using the monomer.

Examples of an aromatic vinyl monomer capable of forming the aromatic vinyl monomer unit are not particularly limited, and include styrene, α-methylstyrene, styrenesulfonic acid, butoxystyrene, and vinylnaphthalene. Examples of a (meth)acrylic acid ester monomer capable of forming the (meth)acrylic acid ester monomer unit include: alkyl acrylates such as methyl acrylate, ethyl acrylate, n-propyl acrylate, isopropyl acrylate, butyl acrylates such as n-butyl acrylate and t-butyl acrylate, pentyl acrylate, hexyl acrylate, heptyl acrylate, octyl acrylates such as 2-ethylhexyl acrylate, nonyl acrylate, decyl acrylate, lauryl acrylate, n-tetradecyl acrylate, and stearyl acrylate; and alkyl methacrylate such as methyl methacrylate, ethyl methacrylate, n-propyl methacrylate, isopropyl methacrylate, butyl methacrylate such as n-butyl methacrylate and t-butyl methacrylate, pentyl methacrylate, hexyl methacrylate, heptyl methacrylate, octyl methacrylate such as 2-ethylhexyl methacrylate, nonyl methacrylate, decyl methacrylate, lauryl methacrylate, n-tetradecyl methacrylate, and stearyl methacrylate.

Examples of a fluorine-containing monomer capable of forming the fluorine-containing monomer unit are not particularly limited, and include vinylidene fluoride, tetrafluoroethylene, hexafluoropropylene, vinyl trifluoride chloride, vinyl fluoride, and perfluoroalkyl vinyl ether.

The resin particle 36 may contain a crosslinkable monomer unit in addition to the above-mentioned monomer unit. Here, the crosslinkable monomer unit is a monomer capable of forming a crosslinked structure during or after polymerization by heating or irradiation with an energy ray. Examples of the monomer capable of forming the crosslinkable monomer unit include a polyfunctional monomer having two or more polymerizable reactive groups in the monomer. Examples of such a polyfunctional monomer include: allyl methacrylate, divinyl compounds such as divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and ethylenically unsaturated monomers containing an epoxy group such as allyl glycidyl ether and glycidyl methacrylate.

The resin particles 36 can be prepared, for example, by polymerizing a monomer composition containing the above-described monomer in an aqueous solvent such as water. Then, a polymerization mode is not particularly limited, and may be, for example, a suspension polymerization method, an emulsion polymerization aggregation method, a pulverization method, or the like. Further, as a polymerization reaction, any reaction such as radical polymerization or living radical polymerization can be used.

In the monomer composition used for preparing the resin particles 36, other compounding materials such as a chain transfer agent, a polymerization modifier, a polymerization reaction retarder, a reactive fluidizing agent, a filler, a flame retardant, an antiaging agent, and a colorant can be compounded in an arbitrary compounding amount.

An example of a method for producing the separator 13 of the present embodiment will be described. For example, the inorganic particles, a heat-resistant resin, the resin particles 36, water as the dispersion medium, and other components (for example, the binder or the like) used as necessary are mixed to prepare a functional layer slurry composition. Then, functional layer slurry is applied onto the base material and then dried, so that the separator 13 of the present embodiment can be produced.

FIG. 4 is a view showing a state of the positive electrode, the negative electrode, and the separator when an inner end side of the electrode assembly in the winding direction is developed. As shown in FIG. 4, the separator 13 constituting the electrode assembly 14 is disposed such that the functional layer 32 faces the positive electrode 11. Therefore, as shown in FIG. 4, in the non-facing portion 12a of the negative electrode 12, the pair of separators 13 are bonded to each other, and a large space S1 is formed between the negative electrode 12 and the separator 13 of the non-facing portion 12a. By forming such a space S1, since it is difficult for the non-aqueous electrolyte to be held in the non-facing portion 12a of the negative electrode 12, decomposition of the non-aqueous electrolyte on the non-facing portion 12a is suppressed by charging and discharging of the battery, and a decrease in initial charge-discharge efficiency of the battery is suppressed. In FIG. 4, the functional layers 32 of the pair of separators 13 face the positive electrode 11, but the functional layer 32 of at least one of the pair of separators 13 only needs to face the positive electrode 11.

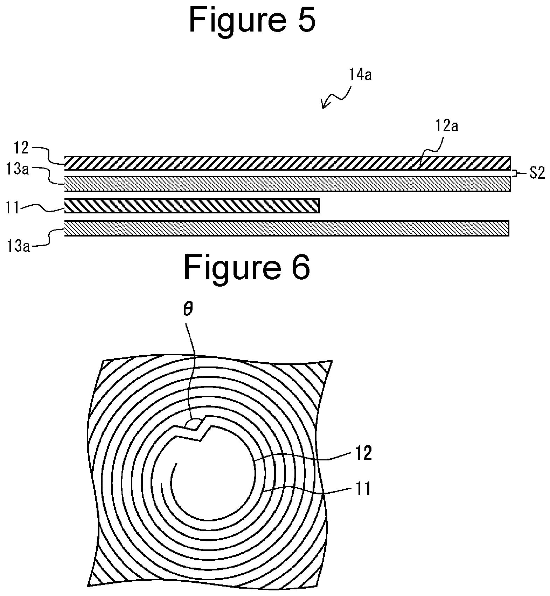

FIG. 5 is a view showing a state of the positive electrode, the negative electrode, and the separator when an inner end side of a conventional electrode assembly in the winding direction is developed. As shown in FIG. 5, a separator 13a constituting a conventional electrode assembly 14a does not include the functional layer 32 (for example, it is composed only of the base material 30). Therefore, in the non-facing portion 12a of the negative electrode 12, the pair of separators 13a are not bonded to each other, and a space between the negative electrode 12 and the separator 13a of the non-facing portion 12a is a narrow space S2. Since the non-aqueous electrolyte is easily held in such a narrow space S2, it is considered that the non-aqueous electrolyte is easily decomposed on the non-facing portion 12a of the negative electrode 12.

### EXAMPLES

Hereinafter, the present disclosure will be further described with reference to Examples, but the present disclosure is not limited to these examples.

### <Example 1>

### [Production of Positive Electrode]

100 parts by mass of LiNi_{0.88}Co_{0.09}Al_{0.03}O₂, 1 part by mass of acetylene black (AB), and 0.9 parts by mass of polyvinylidene fluoride (PVDF) were mixed, and an appropriate amount of N-methyl-2-pyrrolidone (NMP) was added to prepare a positive electrode mixture slurry. Next, the positive electrode mixture slurry was applied to both surfaces of an aluminum foil having a thickness of 15 µm, and a coating film was dried. Then, the coating film was rolled using a roller and then cut into a predetermined electrode size to produce a positive electrode having a positive electrode mixture layer formed on both surfaces of a positive electrode current collector. An exposed portion where the positive electrode mixture layer was not formed and the positive electrode current collector was exposed was provided at a central portion of the positive electrode in the longitudinal direction, and an aluminum positive electrode lead was welded to the exposed portion.

### [Production of Negative Electrode]

88 parts by mass of graphite powder, 12 parts by mass of a Si-based material, 0.56 parts by mass of carbon nanotube (CNT), 1 part by mass of sodium carboxymethylcellulose (CMC-Na), and 1 part by mass of a dispersion of styrene-butadiene rubber (SBR) were mixed, and an appropriate amount of water was added to prepare a negative electrode mixture slurry. Next, the negative electrode mixture slurry was applied to both surfaces of a copper foil having a thickness of 8 µm, and a coating film was dried. Then, the coating film was rolled using a roller and then cut into a predetermined electrode size to produce a negative electrode having a negative electrode mixture layer formed on both surfaces of a negative electrode current collector. An exposed portion where the negative electrode mixture layer was not formed and the negative electrode current collector was exposed was provided at one end portion in the longitudinal direction of the negative electrode (an inner end in the winding direction of the electrode assembly), and a nickel negative electrode lead was welded to the exposed portion.

### [Production of Separator]

A porous base material made of polyethylene having a thickness of 12 µm was prepared. α-Al₂O₃ powders(inorganic particles) having an average particle diameter (D50) of 0.8 µm, acrylic resin particles having an average particle diameter (D50) of 3 µm and including a copolymer of 2-ethylhexyl acrylate and styrene (hereinafter, acrylic resin particles), and an acrylic binder (a binder) were mixed at a solid content mass ratio of 100:6:5, and then an appropriate amount of water was added so that a solid content concentration was 10 mass% to prepare functional layer slurry. The functional layer slurry was applied to an entire area of one surface of the base material using a microgravure coater, and the coating film was heated and dried in an oven at 50°C for 4 hours to obtain a separator having a functional layer having a heat resistant layer formed on the one surface of the base material. When a surface of the functional layer of the separator was observed with a scanning electron microscope, a plurality of projections of the resin particles protruding from the heat resistant layer were observed. The plurality of projections were similarly observed in other Examples.

### [Production of Electrode Assembly]

The separator, the positive electrode, the separator, and the negative electrode were laminated in this order, and then the laminate was spirally wound to produce a winding-type electrode assembly. At this time, a pair of separators were arranged such that the functional layer of each of the pair of separators faced the positive electrode. The number of windings of the electrode assembly was set to 18 times based on the positive electrode. Further, a non-facing portion of the negative electrode was wound 1.5 turns from the inner end in the winding direction of the electrode assembly.

### [Preparation of Non-Aqueous Electrolyte]

5 parts by mass of vinylene carbonate (VC) was added to 100 parts by mass of a mixed solvent obtained by mixing ethylene carbonate (EC) and dimethyl carbonate (DMC) at a volume ratio of 3:7, and lithium hexafluorophosphate (LiPF₆) was dissolved therein at a concentration of 1.5 mol/liter to prepare a non-aqueous electrolyte.

### [Production of Non-Aqueous Electrolyte Secondary Battery]

Insulating plates were respectively arranged above and below the electrode assembly, and the electrode assembly was housed in an exterior can. The negative electrode lead was welded to a bottom of a bottomed cylindrical exterior can, and the positive electrode lead was welded to a sealing assembly. After the non-aqueous electrolyte was injected into the exterior can, an opening of the exterior can was sealed with the sealing assembly through a gasket, and then the exterior can was allowed to stand in a thermostatic chamber at 60°C for 15 hours to produce a non-aqueous electrolyte secondary battery.

### <Example 2>

A non-aqueous electrolyte secondary battery was produced in the same manner as in Example 1 except that the acrylic resin particles having an average particle diameter (D50) of 3 µm were replaced with acrylic resin particles having an average particle diameter (D50) of 5 µm in production of the separator.

### <Example 3>

A non-aqueous electrolyte secondary battery was produced in the same manner as in Example 1 except that the acrylic resin particles having an average particle diameter (D50) of 3 µm were replaced with acrylic resin particles having an average particle diameter (D50) of 7 µm in production of the separator.

### <Example 4>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode.

### <Example 5>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and winding of the non-facing portion of the negative electrode was changed from 1.5 turns to 2.5 turns in production of the electrode assembly.

### <Example 6>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and the acrylic resin particles having an average particle diameter (D50) of 3 µm were changed to acrylic resin particles having an average particle diameter (D50) of 5 µm in production of the separator.

### <Example 7>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and the acrylic resin particles having an average particle diameter (D50) of 3 µm were changed to acrylic resin particles having an average particle diameter (D50) of 7 µm in production of the separator.

### <Example 8>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and the acrylic resin particles having an average particle diameter (D50) of 3 µm were changed to acrylic resin particles having an average particle diameter (D50) of 10 µm in production of the separator.

### <Comparative Example 1>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and winding of the non-facing portion of the negative electrode was changed from 1.5 turns to 1 turn in production of the electrode assembly.

### <Comparative Example 2>

A non-aqueous electrolyte secondary battery was produced in the same manner as in Example 1 except that the graphite powder was changed from 88 parts by mass to 94 parts by mass, and the Si-based material was changed from 12 parts by mass to 6 parts by mass in production of the negative electrode, and a porous base material made of polyethylene having a thickness of 12 µm was used as the separator.

### <Comparative Example 3>

A non-aqueous electrolyte secondary battery was produced in the same manner as in Example 1 except that a porous base material made of polyethylene having a thickness of 12 µm was used as the separator.

### [Initial Charge-Discharge Efficiency]

The non-aqueous electrolyte secondary batteries of Examples and Comparative Examples were charged at a constant current of 0.3 It until a battery voltage reached 4.2 V, and then charged at a constant voltage of 4.2 V until a current reached 0.02It. Thereafter, the battery was discharged at a constant current of 1.0It until the battery voltage reached 2.7 V A charge capacity and a discharge capacity at this time were defined as an initial charge capacity and an initial discharge capacity, and the initial charge-discharge efficiency was calculated by the following equation. Initial charge-discharge efficiency (%) = (Initial discharge capacity/Initial charge capacity) × 100

### [Evaluation of Electrode Plate Deformation]

The above charging and discharging was set as one cycle, and 500 cycles were performed while a pause time of 20 minutes was inserted between cycles. The non-aqueous electrolyte secondary battery after 500 cycles was charged at the constant current of 0.3It until the battery voltage reached 4.2 V, and then charged at a constant voltage of 4.2 V until the current reached 0.02It to enter a charged state. The non-aqueous electrolyte secondary battery in this charged state was subjected to sectional observation near a winding center of the electrode assembly using an X-ray CT apparatus (SMX-225CT FPD HR manufactured by Shimadzu Corporation). As shown in FIG. 6, when deformation (bending) of the electrode plate (at least one of the positive electrode 11 and the negative electrode 12) having an angle θ of less than or equal to 150° was confirmed, it was determined that the electrode plate was deformed, and the presence or absence of electrode plate deformation was evaluated. The number of batteries evaluated is three.

Evaluation results of the initial charge-discharge efficiency and the electrode plate deformation in Examples and Comparative Examples are summarized in Table 1. Of the three batteries evaluated, when no electrode plate deformation occurred in all the batteries, the battery was evaluated as ∘, and when it was confirmed that even one electrode plate deformation occurred, the battery was evaluated as ×.

**[Table 1]**

| | Winding (Turns) of negative electrode non-facing portion | Graphite : Si-based material : CNT Mass ratio | Acrylic resin particles | | Electrode plate deformation | Initial charge-discharge efficiency (%) |
|---|---|---|---|---|---|---|
| | | | Presence or absence | D50 | | |
| Example 1 | 1.5 turns | 88 : 12 : 0.56 | Presence | 3 | ○ | 87 |
| Example 2 | 1.5 turns | 88 : 12 : 0.56 | Presence | 5 | ○ | 86 |
| Example 3 | 1.5 turns | 88 : 12 : 0.56 | Presence | 7 | ○ | 86 |
| Example 4 | 1.5 turns | 94 : 6 : 0.56 | Presence | 3 | ○ | 94 |
| Example 5 | 2.5 turns | 94 : 6 : 0.56 | Presence | 3 | ○ | 94 |
| Example 6 | 1.5 turns | 94 : 6 : 0.56 | Presence | 5 | ○ | 93 |
| Example 7 | 1.5 turns | 94 : 6 : 0.56 | Presence | 7 | ○ | 91 |
| Example 8 | 1.5 turns | 94 : 6 : 0.56 | Presence | 10 | ○ | 89 |
| Comparative Example 1 | 1 turn | 94 : 6 : 0.56 | Presence | 3 | × | 91 |
| Comparative Example 2 | 1.5 turns | 94 : 6 : 0.56 | Absence | - | ○ | 82 |
| Comparative Example 3 | 1.5 turns | 88 : 12 : 0.56 | Absence | - | × | 84 |

In Examples 1 to 8, the initial charge-discharge efficiency showed a high value of greater than or equal to 85%, and the electrode plate deformation did not occur. On the other hand, in Comparative Example 1, the initial charge-discharge efficiency showed a high value, but the electrode plate deformation occurred. In Comparative Example 2, the electrode plate deformation did not occur, but the initial charge-discharge efficiency was less than 85%, which was a low value. In Comparative Example 3, the initial charge-discharge efficiency was low, and the electrode plate deformation occurred.

### REFERENCE SIGNS LIST

- 10: Non-aqueous electrolyte secondary battery
- 11: Positive electrode
- 12: Negative electrode
- 12a: Non-facing portion
- 12b: Facing portion
- 13, 13a: Separator
- 14, 14a: Electrode assembly
- 15: Battery case
- 16: Outer casing
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Base material
- 32: Functional layer
- 34: Heat resistant layer
- 36: Resin particles
- 36a: Projection

## Claims

1. A non-aqueous electrolyte secondary battery comprising: an electrode assembly formed by winding a positive electrode and a negative electrode with a pair of separators interposed therebetween; and a non-aqueous electrolyte, wherein
the negative electrode has a non-facing portion that does not face the positive electrode with the pair of separators interposed therebetween, and the non-facing portion is wound greater than or equal to 1.5 turns from an inner end in a winding direction of the electrode assembly,
at least one of the pair of separators has a base material layer and a functional layer formed on the base material layer,
the functional layer includes a heat resistant layer containing inorganic particles and resin particles dispersed in the heat resistant layer and having an average particle diameter larger than a thickness of the heat resistant layer,
the resin particles form a projection projecting from a surface of the heat resistant layer, and
the functional layer of at least one of the pair of separators faces the positive electrode.

2. The non-aqueous electrolyte secondary battery according to claim 1, wherein an average particle diameter of the resin particles is in a range of 2 µm to 10 µm.

3. The non-aqueous electrolyte secondary battery according to claim 1 or 2, wherein
the negative electrode includes a negative electrode current collector and a negative electrode mixture layer disposed on the negative electrode current collector,
the negative electrode mixture layer contains a Si-based material and a carbon material, and
the Si-based material has a lithium ion conducting phase and Si particles dispersed in the lithium ion conducting phase.
